# EUROPÄISCHE PATENTSCHRIFT

(11) **EP 3 767 185 B1**
(45) Veröffentlichungstag und Bekanntmachung des Hinweises auf die Patenterteilung: **24.01.2024**
(21) Anmeldenummer: 20180830.0
(22) Anmeldetag: 18.06.2020
(51) Int. Cl.: F24C 15/20, B01D 46/00, B01D 46/12

(54) **DUNSTABZUGSVORRICHTUNG MIT FILTERELEMENT**
VAPOUR EXTRACTION DEVICE WITH FILTER ELEMENT
HOTTE ASPIRANTE AVEC ÉLÉMENT FILTRANT

(30) Priorität: 16.07.2019 DE 102019210483
(43) Veröffentlichungstag der Anmeldung: 20.01.2021
(73) Patentinhaber: BSH Hausgeräte GmbH, 81739 München (DE)
(72) Erfinder: Schopp, Daniel, 74374 Zaberfeld (DE); Kateb, Adnen, 76135 Karlsruhe (DE); Driedger, Benjamin, 76356 Weingarten (Baden) (DE)

(56) Entgegenhaltungen:
- EP-A2- 2 338 004
- WO-A1-2011/047944
- DE-U1-202011 109 799
- US-A- 4 689 058

## Beschreibung

Die vorliegende Erfindung betrifft eine Dunstabzugsvorrichtung mit mindestens einem Filterelement.

Bei Dunstabzugsvorrichtungen für die Verwendung in einer Küche, insbesondere Dunstabzugshauben, werden in der Regel ein oder mehrere Filterelemente in einer Ansaugöffnung angeordnet, um die Verunreinigungen aus der anströmenden Luft auszufiltern. Hierbei werden Filterkassetten verwendet, die aus mehreren Filterlagen aus Streckmetall bestehen. Diese Filterlagen sind in einem Trägerrahmen eingefasst. Diese Filterelemente werden auch als Fettfilter bezeichnet.

Ein Nachteil dieser Filterelemente besteht darin, dass sich insbesondere am Übergang zwischen Streckmetall und Trägerrahmen Verunreinigungen vermehrt absetzen können. Zudem ist das optische Erscheinungsbild der bekannten Filterelemente aufgrund des sichtbaren Übergangs zwischen Filterlagen und Trägerrahmen beeinträchtigt.

In der DE 20 2011 109 799 U1 ist ein Filterelement für eine Dunstabzugshaube offenbart, das zumindest eine Drahtfilterlage aufweist, die aus Draht gefertigt ist. In der US 4,689,058 A ist ein Kombinations-Dunstabzugshauben-Filter beschrieben, der aus einem ersten Metallgitterfilter und einem zweiten wegwerfbaren Vliesfilter besteht. In der WO 2011/047944 A1 ist eine Gerätefiltereinheit mit wenigstens einem Element beschrieben. Das Element ist als inhomogenes Luftleitelement ausgebildet, das einen ersten und wenigstens einen zweiten Flächeninnenbereich aufweist, die voneinander wesentlich differierende durchschnittliche Durchströmungsflächendichten aufweisen.

In der EP2338004B1 wird eine Filtersammelanordnung beschrieben, das ein Filterpad aufweist, das Fasern, einschließlich natürlicher, synthetischer und/oder hybrider Fasern umfasst. Ein Stabilisierungsrahmen der aus einem nicht-metallischen Material besteht, kann in das Filterpad eingebettet werden.

Aufgabe der vorliegenden Erfindung ist es somit ein Filterelement zu schaffen, das die Nachteile des Standes der Technik zumindest verringert und das dennoch einfach gehandhabt und hergestellt werden kann.

Die Erfindung betrifft eine Dunstabzugsvorrichtung mit zumindest einem Filterelement mit den Merkmalen des Anspruchs 1.

Die Dunstabzugsvorrichtung stellt vorzugsweise eine Dunstabzugshaube dar. Als Filterelement wird ein flächiges Filterelement bezeichnet. Das Filterelement kann in der oder vor der Ansaugöffnung der Dunstabzugsvorrichtung angeordnet werden. Das Filterelement weist mindestens zwei Filterlagen auf. Als Filterlage wird eine Schicht aus Filtermaterial bezeichnet, an dem zumindest ein Teil der Verunreinigungen, insbesondere Fett, aus der verunreinigten Luft, die das Filterelement anströmt, ausgefiltert werden kann. Die verunreinigte Luft wird auch als Dünste oder Wrasen bezeichnet. Das Filterelement weist eine Anströmseite und eine Reinluftseite auf. Als Anströmseite wird die Seite bezeichnet, an der das Filterelement in der in der Dunstabzugsvorrichtung angeordneten Position von der verunreinigten Luft angeströmt wird. Als Reinluftseite wird die Seite bezeichnet, über die die gereinigte Luft aus dem Filterelement austritt. Die Reinluftseite liegt der Anströmseite gegenüber und ist im eingebrachten Zustand des Filterelementes der Innenseite der Dunstabzugsvorrichtung zugewandt. Das Filterelement weist mindestens zwei Filterlagen auf. Die Anzahl der Filterlagen kann allerdings auch höher sein. Beispielsweise kann das Filterelement drei oder neun Lagen aufweisen. Die mindestens zwei Filterlagen werden im Folgenden auch als Stapel von Filterlagen oder einfach als Stapel bezeichnet. Die Erfindung ist nicht auf eine bestimmte Anzahl von Filterlagen beschränkt. Die Filterlagen können jeweils aus dem gleichen Filtermaterial bestehen. Allerdings können in dem Filterelement auch Filterlagen aus unterschiedlichem Filtermaterial verwendet werden. Beispielsweise kann mindestens eine Filterlage eine Streckmetalllage darstellen und mindestens eine weitere Filterlage ein Vlies, beispielsweise ein Metallvlies, darstellen. Die Filterlagen sind aufeinander in dem Filterelement angeordnet. Hierbei wird die Filterlage, die an der Reinluftseite des Filterelementes liegt, auch als obere Filterlage bezeichnet.

Erfindungsgemäß weist das Filterelement eine Decklage auf, die auch als Abdeckung bezeichnet werden kann. Als Decklage wird eine Lage oder Schicht bezeichnet. Die Decklage bildet Anströmseite des Filterelementes, die auch als Unterseite bezeichnet werden kann. Der Teil der Decklage, der die Anströmseite des Filterelementes bildet, liegt dabei vorzugsweise zumindest teilweise an der Fläche der unteren der mehreren Filterlagen an. Dieser Teil der Decklage wird im Folgenden auch als Grundfläche der Decklage bezeichnet. Vorzugsweise liegt die Grundfläche der Decklage der zu den Filterlagen des Filterelementes parallel. Die Decklage deckt daher den Stapel von Filterlagen nach unten ab. Die Decklage kann aus einer einzigen Schicht oder Lage bestehen. Es liegt allerdings auch im Rahmen der Erfindung, dass die Decklage aus mehreren Schichten oder Lagen besteht.

Erfindungsgemäß deckt die Decklage die Ränder der Filterlagen des Filterelementes ab. Als Ränder werden die seitlichen Enden der Filterlagen bezeichnet. Die Filterlagen weisen vorzugsweise eine rechteckige Form auf. Die Decklage deckt vorzugsweise alle Ränder beziehungsweise Kanten der übereinander liegenden Filterlagen zu den Seiten ab. Zu diesem Zweck ist die Decklage vorzugsweise an den Rändern der Grundfläche senkrecht nach oben, das heißt in die Richtung der Filterlagen umgebogen. Der nach oben gebogene Teil der Decklage bildet dabei die seitlichen Außenseiten des Filterelementes. Die Decklage umgibt den Stapel von Filterlagen somit von unten und von den Seiten. Das Abdecken der Ränder der Filterlagen kann mittelbar oder unmittelbar sein. Insbesondere kann zwischen den Rändern der Filterlagen ein weiteres Element des Filterelementes angeordnet sein oder die Ränder der Filterlagen können unmittelbar an der Decklage anliegen.

Richtungsangaben, wie oben oder unten beziehen sich - soweit nicht anders angegeben - auf das Filterelement in dem Zustand, in dem dieses in einer Dunstabzugsvorrichtung mit horizontaler Ansaugöffnung, die von unten angeströmt wird, an der Ansaugöffnung angeordnet ist. Die Anströmseite des Filterelementes wird daher auch als Unterseite des Filterelementes bezeichnet und die Reinluftseite als Oberseite.

Die Decklage besteht aus Filtermaterial. Insbesondere besteht vorzugsweise sowohl die Grundfläche als auch der Teil der Decklage, der den Stapel von Filterlagen zu den Seiten abdeckt, aus Filtermaterial. Vorzugsweise besteht die Decklage vollständig aus Filtermaterial.

Indem erfindungsgemäß eine Decklage aus Filtermaterial vorgesehen ist, die die Anströmseite des Filterelementes bildet und die Ränder der Filterlagen des Filterelementes abdeckt, kann eine Reihe von Vorteilen erzielt werden.

Dabei wird die Anströmseite des Filterelementes durch die durchgehende Grundfläche der Deckplatte gebildet. Somit existiert an der Anströmseite des Filterelementes kein Übergang zwischen unterschiedlichen Teilen des Filterelementes, an denen sich Verunreinigungen vermehrt absetzen. Vielmehr kann die gesamte Grundfläche der Deckplatte zum Ablagern und Halten von Verunreinigungen dienen. Somit kann beispielsweise ein Herabtropfen von Verunreinigungen von einem Rahmen, der im Stand der Technik Teil der Anströmseite bildet, verhindert werden. Auch die Reinigung des Filterelementes ist aufgrund der durchgehenden Anströmseite im Vergleich zum Stand der Technik vereinfacht. Zudem ist das optische Erscheinungsbild des erfindungsgemäßen Filterelementes aufgrund der durchgehenden Grundfläche der Decklage, die die Anströmseite bildet gegenüber dem Stand der Technik verbessert. Dies ist insbesondere für Dunstabzugshauben von Vorteil, bei denen das Filterelement in einer aus der Horizontalen nach oben geneigten Richtung angebracht ist. Diese Dunstabzugshauben werden auch als Schräghauben bezeichnet. Bei diesen Dunstabzugshauben ist nämlich die Anströmseite des Filterelementes für den Benutzer sichtbar. Da die Decklage den Stapel von Filterlagen nach unten und zu den Seiten umgibt, sind die Ränder der Filterlagen für den Benutzer nicht zugänglich und ein Verletzungsrisiko kann daher verhindert werden, wodurch die Handhabung erleichtert wird. Zudem kann die Decklage nach der Herstellung des Stapels von Filterlagen auf einfache Weise um diese herum gelegt werden und die Herstellung des Filterelementes ist damit vereinfacht. Da die Decklage vorzugsweise vollständig aus Filtermaterial besteht, ist eine genaue Ausrichtung der Decklage mit den Filterlagen bei der Bildung der Grundfläche nicht erforderlich. Dies ist gegenüber einem Deckblech, in das nur in der Grundfläche Löcher eingebracht ist, vorteilhaft, da bei diesem Deckblech die genaue Ausrichtung der Filterlagen mit der Grundfläche bei der Herstellung des Filterelementes erforderlich ist.

Gemäß einer bevorzugten Ausführungsform weist das Filterelement im Randbereich eine Verstärkung auf und die Decklage deckt die Verstärkung ab. Als Verstärkung wird ein Mittel bezeichnet, durch das die Stabilität des Filterelementes erhöht wird. Die Verstärkung ist im Randbereich vorgesehen. Vorzugsweise ist die Verstärkung entlang der Ränder der Filterlagen vorgesehen und erstreckt sich von dem jeweiligen Rand teilweise in Flächenrichtung der Filterlage nach innen. Indem die Verstärkung von der Decklage abgedeckt ist, kann auch mit einer Verstärkung das optische Erscheinungsbild einheitlich gehalten werden. Zudem kann die Verstärkung durch die Decklage an den Seiten abgedeckt werden und somit ein Verletzungsrisiko für den Benutzer verhindert werden. Schließlich kann beim Vorsehen einer Verstärkung durch ein separates Element dieses durch die Decklage gehalten werden und ein Verschieben der Verstärkung verhindert werden.

Gemäß einer Ausführungsform stellt die Verstärkung eine Prägung von zumindest einem Teil der Filterlagen dar. Insbesondere werden die Ränder der übereinander liegenden Filterlagen miteinander durch Prägen miteinander verbunden. Als Prägung wird eine Verbindung bezeichnet, die durch Druckaufbringung erzeugt wird. Hierbei können die Ränder der Filterlagen miteinander verpresst werden. Es liegt aber auch im Rahmen der Erfindung, dass in der Fläche des Stapels von Filterlagen eine mindestens eine Prägung vorgesehen wird, diese kann sich linienförmig in Breiten- oder Tiefenrichtung des Stapels erstrecken. Wird als Prägewerkzeug ein Werkzeug verwendet, dessen Oberfläche eine Kontur aufweist, kann der geprägte Rand des Stapels von Filterlagen beispielsweise eine Wellenform aufweisen. Durch das Prägen von zumindest einem Teil der Filterlagen und insbesondere der Ränder der Filterlagen, kann die Stabilität des Filterelementes gesteigert werden. Damit sind die Anforderungen an das Material der Deckplatte verringert und es kann beispielsweise eine Decklage mit geringerer Dicke verwendet werden. Somit ist bei dieser Ausführungsform sowohl die Herstellung als auch die Handhabung vereinfacht und das optische Erscheinungsbild des Filterelementes bleibt aufgrund der Decklage dennoch erhalten.

Alternativ oder zusätzlich zu einer Prägung kann die Verstärkung vorzugsweise mindestens ein Verstärkungselement umfassen. Als Verstärkungselement wird ein Element bezeichnet, das zu den Filterlagen und der Decklage des Filterelementes separat ist und die Stabilität des Filterelementes erhöht. Das Verstärkungselement kann zumindest bereichsweise auf oder unter dem Stapel der Filterlagen angeordnet sein. Alternativ oder zusätzlich kann das das Verstärkungselement auch zumindest teilweise zwischen zwei benachbarten, das heißt aufeinander liegenden Filterlagen angeordnet sein. Indem ein separates Verstärkungselement verwendet wird, kann dessen Form, Material und Anordnung in dem Filterelement frei gewählt werden. Das Verstärkungselemente kann beispielsweise aus Metall oder Kunststoff bestehen. Insbesondere kann das Verstärkungselement beispielsweise aus einem magnetisierbaren Metall hergestellt werden. Das Verstärkungselement ist vorzugsweise so in dem Filterelement angeordnet, dass dieses an den Rändern der Filterelemente und/oder im Randbereich der Flächen der Filterlagen an den Filterlagen anliegt.

Gemäß einer Ausführungsform ist das Verstärkungselement zumindest teilweise auf dem Rand der Filterlage angeordnet, die in dem Filterelement der Anströmseite des Filterelementes gegenüberliegt. Das Verstärkungselement liegt damit bei dieser Ausführungsform auf dem Rand der oberen Filterlage. Vorzugsweise erstreckt sich das Verstärkungselement dabei über den gesamten Rand der oberen Filterlage. Das Verstärkungselement ist vorzugsweise einteilig ausgestaltet. Hierdurch wird die Herstellung des Filterelementes vereinfacht und die Stabilität des Filterelementes gesteigert. Indem das Verstärkungselement auf der oberen Filterlage angeordnet ist, kann dieses nach der Herstellung des Stapels und auch beispielsweise nach einem Prägen der Filterlagen des Stapels auf den Stapel aufgebracht werden. Hierdurch ist die Herstellung vereinfacht. Zudem kann durch das Anordnen des Verstärkungselementes auf die obere Filterlage die Filterfunktion der darunter liegenden Filterlagen über deren gesamte Fläche genutzt werden, da diese durch das Verstärkungselement nicht nach unten abgedeckt sind. Vorzugsweise ist bei der Ausführungsform, bei der das Verstärkungselement auf dem Rand der oberen Filterlage angeordnet ist, das Verstärkungselement zumindest zu den Seiten von der Decklage abgedeckt. Hierbei kann das Verstärkungselement zumindest in Flächenrichtung der Filterlagen gehalten werden und an einem Verrutschen gehindert werden. Eine separate Befestigung des Verstärkungselementes an den Filterlagen kann dabei entfallen.

Das Verstärkungselement kann einen Rahmen mit einem U-förmigen, einem L-förmigen, T-förmigen oder einem flachen Querschnitt darstellen. Erfindungsgemäß können auch mehrere Verstärkungselemente unterschiedlicher Form vorgesehen werden. Beispielsweise kann das Filterelement einen Rahmen mit U-förmigen Querschnitt und einen Rahmen mit flachem Querschnitt aufweisen. Auch bei der Ausführungsform, bei der das Verstärkungselement einen Rahmen darstellt, wird dieses von der Decklage zumindest zu den Seiten abgedeckt. Die Rahmen, die als Verstärkungselemente verwendet werden können, können beispielsweise ein Rollforming oder Extrusionsprofil aus Edelstahl beziehungsweise Aluminium darstellen.

Bei einem Rahmen mit U-förmigem Querschnitt ist dieser vorzugsweise so ausgelegt, dass die offenen Seiten des U-Profils einander zugewandt sind. In den offenen Seiten des U-Profils kann zumindest eine Filterlage an deren Rand aufgenommen sein. Gemäß einer Ausführungsform umfasst das U-Profil alle Filterlagen an deren Rändern, das heißt die Filterlagen sind in dem U-Profil aufgenommen. Alternativ kann der Rahmen mit dem U-förmigen Querschnitt auch auf die obere Filterlage aufgelegt sein. Auch in dieser Ausführungsform sind die offenen Seiten des U-Profils des Rahmens einander zugewandt; die Ränder der Filterlagen werden aber nicht durch den Rahmen gehalten. Vielmehr sind bei dieser Ausführungsform die Filterlagen und das Verstärkungselement nur durch die Decklage gehalten.

Bei der Ausführungsform, bei der das Verstärkungselement einen Rahmen mit L-förmigem Querschnitt darstellt, kann ein Schenkel des L-Profils auf die Oberseite der oberen Filterlage aufgelegt werden. Der zweite Schenkel kann sich entweder entlang der Ränder von zumindest einer der Filterlagen nach unten erstrecken oder nach oben weg von den Filterlagen erstrecken. Es ist auch möglich, dass das L-Profil so angeordnet wird, dass der eine Schenkel zwischen zwei benachbarten Filterlagen angeordnet wird und der zweite Schenkel sich entlang des Randes mindestens einer weiteren Filterlage nach oben oder nach unten erstreckt.

Bei der Ausführungsform, bei der das Verstärkungselement einen Rahmen mit T-förmigem Querschnitt darstellt, kann der Hauptschenkel des T-Profils auf die obere Filterlage aufgelegt werden. Einer von dem Hauptschenkel abgehender Schenkel erstreckt nach oben weg und der andere von dem Hauptschenkel abgehende Schenkel erstreckt sich nach unten entlang des Randes mindestens einer Filterlage. Alternativ kann der der Rahmen mit T-förmigem Profil auch so angeordnet werden, dass der Hauptschenkel zwischen zwei benachbarten Filterlagen liegt und die beiden von dem Hauptschenkel abgehenden Schenkel sich nach oben und nach unten entlang der Ränder von Filterlagen erstrecken.

Bei der Ausführungsform, bei der das Verstärkungselement einen Rahmen mit flachem Querschnitt darstellt, kann dieses entweder auf den Stapel von Filterlage oder unter den Stapel von Filterlagen gelegt werden. Alternativ oder zusätzlich kann der Rahmen auch zwischen benachbarten Filterlagen angeordnet werden.

Ein Vorteil, den ein Verstärkungselement in Form eines Rahmens aufweist, ist, dass die Herstellung vereinfacht ist, da dieser als ein Teil in dem Filterelement verbaut werden kann. Zudem kann bei einem U-Profil, T-Profil oder L-Profil auch zumindest ein Teil der Filterlagen durch den Rahmen gehalten werden. Der Rahmen wird zumindest zu den Seiten von der Decklage abgedeckt. Vorzugsweise wird der Rahmen auch nach oben von der Decklage abgedeckt.

Gemäß einer Ausführungsform weist die Decklage daher auf der Seite, die der Anströmseite des Filterelementes gegenüberliegt, eine Abkantung, die nach innen gerichtet ist, auf. Die Seite, die der Anströmseite des Filterelementes gegenüber liegt, kann auch als Reinluftseite oder Oberseite des Filterelementes bezeichnet werden. Die Abkantung der Decklage erstreckt sich nach innen. Dies bedeutet, dass die Abkantung zu den Filterlagen gerichtet ist. Von der Grundfläche der Decklage, die die Anströmseite des Filterelementes bildet, erstreckt sich die Decklage an den Rändern der Grundfläche nach oben und bildet hierdurch Seitenflächen, durch die die Filterlagen und gegebenenfalls vorgesehene Verstärkungen zu den Seiten abgedeckt werden. Am oberen Ende der Seitenflächen ist die Abkantung der Decklage vorgesehen. Durch das Vorsehen einer Abkantung können die Decklagen und gegebenenfalls Verstärkungen in dem Filterelement zuverlässig gehalten werden.

Erfindungsgemäß stellt die Decklage eine Streckmetalllage dar. Ein Vorteil der Verwendung von Streckmetall als Decklage besteht zum einen darin, dass Streckmetall einfach herzustellen und zu bearbeiten ist. Insbesondere kann die erforderliche Form der Decklage, mit der diese die Anströmseite des Filterelementes bildet und die Ränder der Filterlagen sowie gegebenenfalls vorgesehene Verstärkungen zu den Seiten abdeckt, auf einfache Weise erzeugt werden. Zudem lässt sich Streckmetall auf einfache Weise behandeln. Insbesondere kann Streckmetall oberflächenbehandelt, beispielsweise eloxiert oder beschichtet werden. Hierdurch können die optischen Eigenschaften des Filterelementes verbessert und dessen Reinigung erleichtert werden.

Gemäß einer Ausführungsform weist das Filterelement ein magnetisierbares Element auf. Das magnetisierbare Element ist vorzugsweise im oberen Bereich des Filterelementes angeordnet. Beispielsweise kann das magnetisierbare Element auf der oberen Filterlage aufgelegt sein und von der Decklage nach oben durch die Abkantung abgedeckt sein. Das magnetisierbare Element kann beispielsweise ein das Verstärkungselement bilden. Indem ein magnetisierbares Element vorgesehen ist, kann das Filterelement an der Dunstabzugsvorrichtung lösbar befestigt werden, ohne dass ein Griff erforderlich ist, der Befestigungsstifte aus einer Seite des Filterelementes ausfährt, wie dies im Stand der Technik der Fall ist. Hierdurch wird die Herstellung und Verwendung des Filterelementes weiter vereinfacht. Anstatt der Ausführung eines Verstärkungselementes als magnetisierbares Element kann auch die Decklage aus einem magnetisierbaren Material hergestellt werden. An der Dunstabzugsvorrichtung ist bei dieser Ausführungsform ein Magnet vorgesehen, über den das Filterelement gehalten wird. Alternativ kann an dem Filterelement ein Magnet vorgesehen sein und zumindest ein Teil der Dunstabzugsvorrichtung an der Ansaugöffnung aus einem magnetisierbaren Material bestehen.

Vorteile und Merkmale, die bezüglich des erfindungsgemäßen Filterelementes beschrieben wurden, gelten - soweit anwendbar - entsprechend für die erfindungsgemäße Dunstabzugsvorrichtung und umgekehrt und werden daher gegebenenfalls nur einmalig beschrieben.

Die Dunstabzugsvorrichtung weist eine Ansaugöffnung auf, die in der Vertikalen oder zwischen der Vertikalen und Horizontalen geneigt liegt. An der Ansaugöffnung ist zumindest ein erfindungsgemäßes Filterelement so angeordnet, dass die Decklage und insbesondere die Grundfläche der Decklage die Anströmseite des Filterelementes bildet.

Gemäß einer Ausführungsform umfasst die Dunstabzugsvorrichtung an der Ansaugöffnung mindestens einen Magneten. Über den mindestens einen Magneten kann das mindestens eine Filterelement gehalten werden und dieses grifflos ausgestaltet sein.

Die Erfindung wird im Folgenden erneut unter Bezugnahme auf die beiliegenden Figuren genauer beschrieben. Es zeigen:
- Figur 1:: eine schematische, perspektivische Unteransicht einer Ausführungsform des erfindungsgemäß verwendeten Filterelementes;
- Figur 2:: eine schematische, perspektivische Draufsicht der Ausführungsform des erfindungsgemäß verwendeten Filterelementes nach Figur 1;
- Figur 3:: eine schematische Detailansicht der Ausführungsform des erfindungsgemäß verwendeten Filterelementes nach Figur 1;
- Figur 4:: eine schematische Schnittansicht der Ausführungsform des erfindungsgemäß verwendeten Filterelementes nach Figur 1; und
- Figuren 5 bis 9:: schematische Schnittansichten weiterer Ausführungsformen des erfindungsgemäß verwendeten Filterelementes.

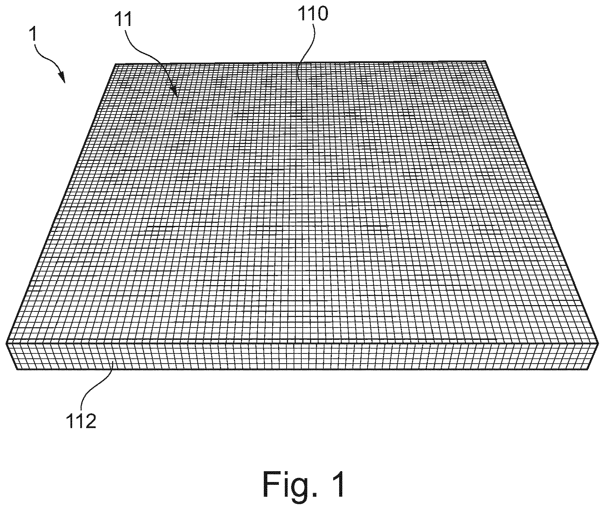

In Figur 1 ist eine Ausführungsform eines erfindungsgemäß verwendeten Filterelementes 1 in perspektivischer Unteransicht gezeigt. Das Filterelement 1 stellt ein rechteckiges Filterelement 1 dar. In der Unteransicht des Filterelementes 1 ist nur die Anströmfläche des Filterelementes 1 zu sehen. Diese Anströmseite wird durch die Grundfläche 110 einer Decklage 11 des Filterelementes 1 gebildet. In der dargestellten Ausführungsform wird die Decklage 11 durch eine Streckmetalllage gebildet. An den Rändern der Grundfläche 110 ist die Decklage 11 nach oben (in Figur 1 nach unten) gebogen. Dadurch werden Seitenflächen 111 der Decklage 11 gebildet, die sich in der gezeigten Ausführungsform senkrecht zu der Grundfläche 110 erstrecken.

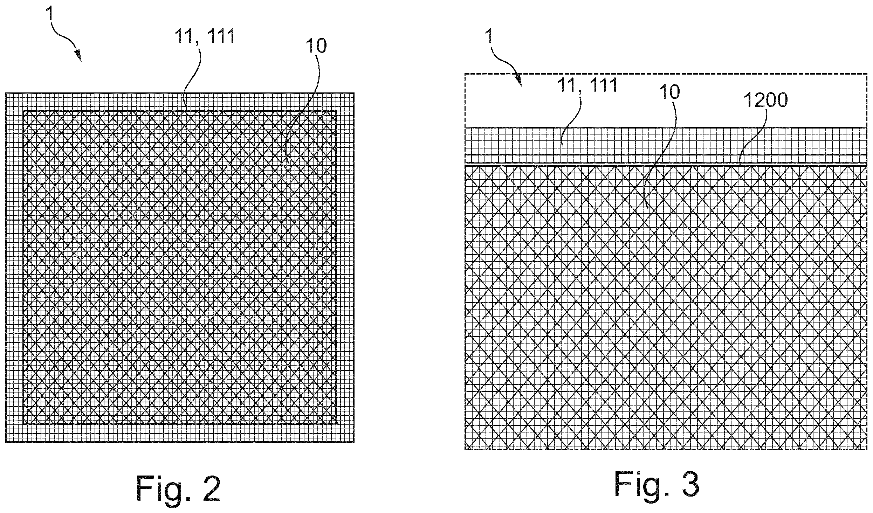

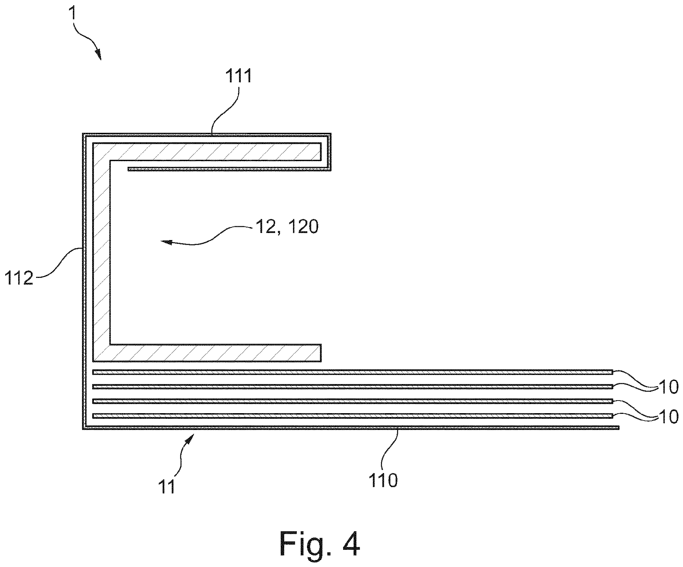

Der genauere Aufbau des Filterelementes 1 ist in den Figuren 2 bis 4 gezeigt. Wie sich aus Figur 4, die einen Schnitt durch einen seitlichen Teil des Filterelementes 1 nach Figur 1 zeigt, ergibt, weist das Filterelement 1 in der gezeigten Ausführungsform vier Filterlagen 10 auf. Die Filterlagen 10 sind nach unten und zu den Seiten von der Decklage 11 umgeben. Insbesondere liegt die untere Filterlage 10 des Stapels von Filterlagen 10 auf der Decklage 11 auf. Dieser Bereich bildet die Grundfläche 110 der Decklage 11. An den Rändern der Grundfläche 110 ist die Decklage 11 nach oben gebogen und bildet Seitenflächen 112 der Decklage 11. Die Seitenflächen 112 decken die Ränder der Filterlagen 10 zu den Seiten ab. Auf der oberen Filterlage 10 ist eine Verstärkung 12 in Form eines Verstärkungselementes 120 angeordnet. Das Verstärkungselement 120 liegt auf dem Randbereich der oberen Filterlage 10. Das Verstärkungselement 120 ist in der ersten Ausführungsform nach den Figuren 1 bis 4 ein Rahmen mit einem U-förmigen Querschnitt. Die Basis des U-Profils liegt dabei auf dem äußeren Rand der oberen Filterlage 10 und die Schenkel sind nach innen gerichtet. Der untere Schenkel liegt auf der oberen Filterlage 10 auf. Die Seitenfläche 112 der Decklage 11 weist eine Höhe auf, die der Höhe des Stapels der Filterlagen 10 und der Höhe des Verstärkungselementes 120 entspricht. Somit umgibt die Decklage 11 die Filterlagen 10 und das Verstärkungselement 120 zu den Seiten, insbesondere am äußeren Rand. In der gezeigten Ausführungsform weist die Decklage 11 an dem oberen Ende der Seitenfläche 112 eine Abkantung 111 auf. Die Abkantung 111 liegt damit an der Oberseite des Filterelementes 1, das heißt an der der Anströmseite, in der die Grundfläche 110 liegt, abgewandten Seite. Die Abkantung 111 liegt auf der oberen Seite des oberen Schenkels des Verstärkungselementes 120 auf. An dem freien Ende der Abkantung 111 ist diese nach unten und nach außen umgebogen. Hierdurch erstreckt sich die Decklage 11 um das freie Ende des oberen Schenkels des Verstärkungselementes 120 und entlang der Unterseite des oberen Schenkels des Verstärkungselementes 120 nach außen. Somit liegt das Ende der Decklage 11 im Inneren des Verstärkungselementes 120 und eine Verletzung des Benutzers beim Berühren des Filterelementes 1 kann verhindert werden.

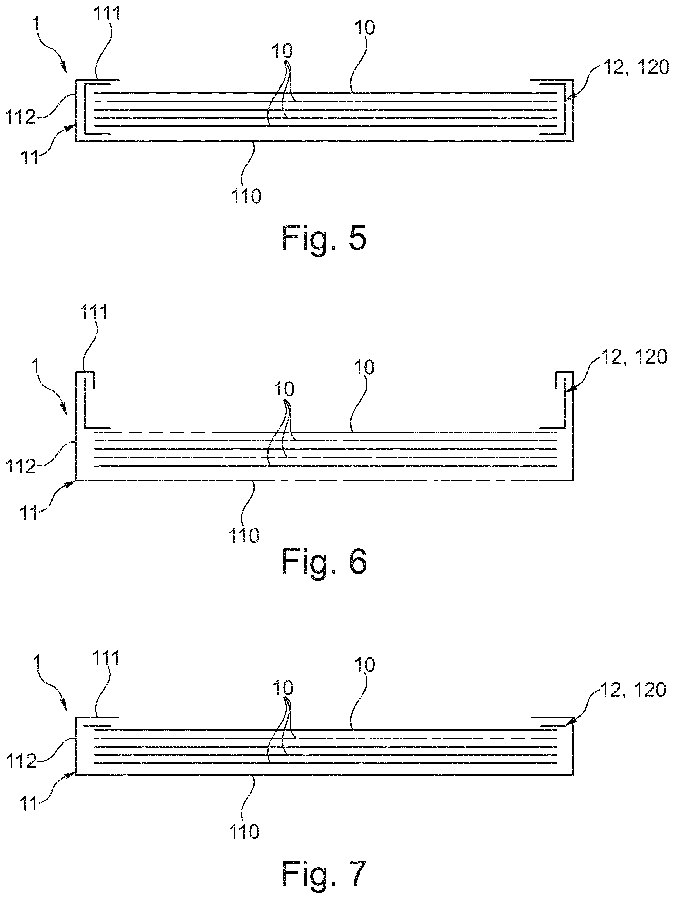

In Figur 5 ist eine zweite Ausführungsform des Filterelementes 1 gezeigt. Diese Ausführungsform unterscheidet sich von der ersten Ausführungsform nur dadurch, dass das Verstärkungselement 120 in Form eines U-förmigen Rahmens auf der Grundfläche 110 der Decklage 11 aufgelegt ist und die Ränder der Filterlagen 10 in dem U-förmigen Profil aufgenommen sind. Zudem ist bei der zweiten Ausführungsform der Umschlag des freien Endes der Abkantung 111 der Decklage 11 nicht gezeigt. Dieser Umschlag kann aber auch bei der zweiten Ausführungsform vorgesehen sein.

In Figur 6 ist eine dritte Ausführungsform des Filterelementes 1 gezeigt. Diese Ausführungsform unterscheidet sich von der ersten Ausführungsform nur dadurch, dass das Verstärkungselement 120 einen Rahmen mit einem L-förmigen Querschnitt darstellt. Der untere Schenkel des Rahmens liegt auf der oberen Filterlage 10 im Randbereich auf und der zweite Schenkel erstreckt sich vom äußersten Rand der oberen Filterlage 10 nach oben. Das obere Ende des zweiten Schenkels wird von der Decklage 11 durch eine Abkantung 111 und einen an dem freien Ende der Abkantung 111 vorgesehen Abbug umfasst.

In Figur 7 ist eine vierte Ausführungsform des Filterelementes 1 gezeigt. Diese Ausführungsform unterscheidet sich von der ersten Ausführungsform nur dadurch, dass das Verstärkungselement 120 einen Rahmen mit einem flachen Querschnitt darstellt. Der Rahmen liegt auf der oberen Filterlage 10 im Randbereich auf und wird von der Decklage 11 und insbesondere eine Abkantung 111 nach oben abgedeckt.

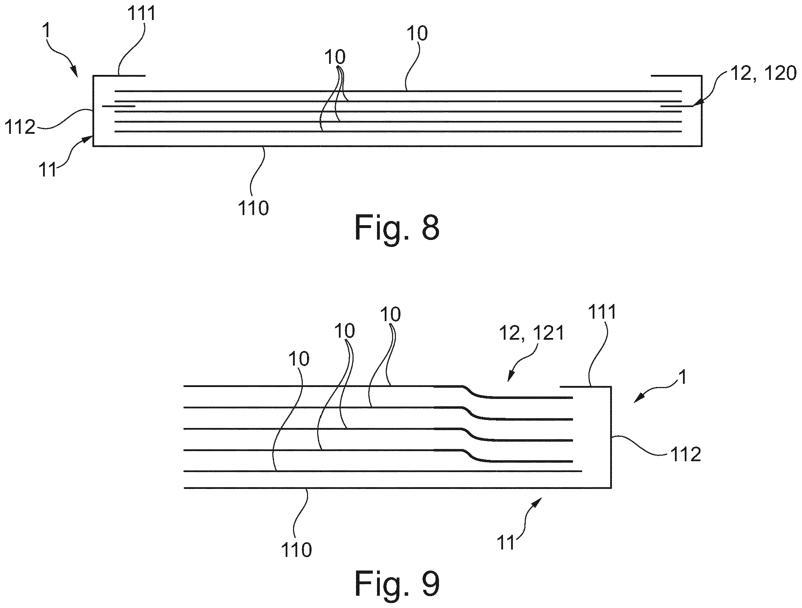

In Figur 8 ist eine fünfte Ausführungsform des Filterelementes 1 gezeigt. Diese Ausführungsform unterscheidet sich von der vierten Ausführungsform nur dadurch, dass das Verstärkungselement 120 in Form des Rahmen mit einem flachen Querschnitt zwischen zwei Filterlagen 10 angeordnet ist.

In Figur 9 ist eine sechste Ausführungsform des Filterelementes 1 gezeigt. Diese Ausführungsform unterscheidet sich von der fünften Ausführungsform nur dadurch, dass kein Verstärkungselement 120 vorgesehen ist. In der sechsten Ausführungsform wird die Verstärkung 12 durch eine Prägung 121 gebildet. Insbesondere sind die Ränder der Filterlagen 10 miteinander verpresst. Diese geprägten Ränder sind von den Seitenflächen 112 der Deckschicht 11 umgeben und werden nach oben durch die Abkantung 111 der Deckschicht 11 abgedeckt.

Die vorliegende Erfindung unterscheidet sich somit vom Stand der Technik. Im Stand der Technik werden beispielsweise Streckmetallfilter verwendet, die einen im Sichtbereich liegenden Tragrahmen aufweisen. Mit der vorliegenden Erfindung wird hingegen ein Filterelement mit rahmenloser Optik erzeugen. Vorzugsweise weist dieser weiterhin ein Verstärkungselement auf. Dieses kann aus verschiedenen Materialien hergestellt werden. Ebenso kann das Verstärkungselement in verschiedene Geometrien hergestellt werden.

Zur Herstellung einer Ausführungsform des erfindungsgemäßen Filterelementes kann beispielsweise ein Rahmen mit U-Profil auf die Filterlagen aus Streckmetall gestellt werden. Dadurch wird die Blickdichte auf der Unterseite des Filterelementes, die auch als Vorderseite bezeichnet werden kann, erzeugt. Insbesondere wird der Rahmen durch die Filterlagen verdeckt. Anschließend wird die Decklage über den Rahmen gezogen, so dass dieser nicht sichtbar ist. Alternativ zu den Streckmetall-Filterlagen können verschiedenste andere Materialien, wie zum Beispiel im speziellen PP-Mesh, Schäume, Streckmetalle oder andere Metallgewebe als Filter- und Decklage verwendet werden.

Die vorliegende Erfindung weist eine Reihe von Vorteilen auf. Insbesondere kann eine homogene Filterfläche ohne Unterbrechung durch den Rahmen erzielt werden. Zudem treten keine Schlieren auf einem sichtbaren Rahmen auf. Bei einer grifflosen Variante können die Kosten verringert werden. Zudem weist bei dieser grifflosen Variante das Filterelement eine bessere Reinigbarkeit auf, da keine Griffverschmutzung auftreten kann.

### Bezugszeichenliste

- 1: Filterelement
- 10: Filterlage
- 11: Decklage
- 110: Grundfläche
- 111: Abkantung
- 112: Seitenfläche
- 12: Verstärkung
- 120: Verstärkungselement
- 121: Prägung

## Patentansprüche

1. Dunstabzugsvorrichtung, die zumindest ein Filterelement (1) mit mindestens zwei Filterlagen (10) aufweist, wobei das Filterelement (1) eine Decklage (11), die aus Filtermaterial besteht, aufweist, die die Anströmseite des Filterelementes (1) bildet und die Kanten der Filterlagen (10) abdeckt, und wobei die Dunstabzugsvorrichtung eine Ansaugöffnung aufweist, die in der Vertikalen oder zwischen der Vertikalen und Horizontalen geneigt liegt und wobei an der Ansaugöffnung das zumindest eine Filterelement (1) so angeordnet ist, dass die Decklage (11) die Anströmseite des Filterelementes (1) bildet **dadurch gekennzeichnet, dass** die Decklage (11) eine Streckmetalllage darstellt.

2. Dunstabzugsvorrichtung nach Anspruch 1, wobei das Filterelement (1) im Randbereich eine Verstärkung (12) aufweist und die Decklage (11) die Verstärkung (12) abdeckt.

3. Dunstabzugsvorrichtung nach Anspruch 2, wobei die Verstärkung (12) eine Prägung (121) von zumindest einem Teil der Filterlagen (10) darstellt.

4. Dunstabzugsvorrichtung nach einem der Ansprüche 2 oder 3, wobei die Verstärkung (12) mindestens ein Verstärkungselement (120) umfasst.

5. Dunstabzugsvorrichtung nach Anspruch 4, wobei das Verstärkungselement (120) zumindest teilweise auf dem Rand der Filterlage (10) angeordnet ist, die in dem Filterelement (10) der Anströmseite des Filterelementes (1) gegenüberliegt, und zumindest zu den Seiten von der Decklage (11) abgedeckt ist.

6. Dunstabzugsvorrichtung nach einem der Ansprüche 4 oder 5, wobei das Verstärkungselement (120) einen Rahmen mit einem U-förmigen, einem L-förmigen, T-förmigen oder einem flachen Querschnitt darstellt.

7. Dunstabzugsvorrichtung nach einem der Ansprüche 1 bis 6, wobei die Decklage (11) auf der Seite, die der Anströmseite des Filterelementes (10) gegenüberliegt, eine Abkantung (111), die nach innen gerichtet ist, aufweist.

8. Dunstabzugsvorrichtung nach einem der Ansprüche 4 bis 7, wobei das Filterelement (1) ein magnetisierbares Element aufweist und das magnetisierbare Element das Verstärkungselement (120) bildet.

## Claims

1. Vapour extraction device, which has at least one filter element (1) with at least two filter layers (10), wherein the filter element (1) has a top layer (11) consisting of filter material, which forms the upstream side of the filter element (1) and covers the edges of the filter layers (10), and wherein the vapour extraction device has an intake opening, which is at an incline in the vertical or between the vertical and horizontal and wherein the at least one filter element (1) is arranged on the intake opening so that the top layer (11) forms the upstream side of the filter element (1), **characterised in that** the cover layer (11) represents an expanded metal layer.

2. Vapour extraction device according to claim 1, wherein the filter element (1) has a reinforcement (12) in the edge region and the cover layer (11) covers the reinforcement (12).

3. Vapour extraction device according to claim 2, wherein the reinforcement (12) represents an embossing (121) of at least one part of the filter layers (10).

4. Vapour extraction device according to one of claims 2 or 3, wherein the reinforcement (12) comprises at least one reinforcement element (120).

5. Vapour extraction device according to claim 4, wherein the reinforcement element (120) is arranged at least partially on the edge of the filter layer (10), which, in the filter element (10), faces the upstream side of the filter element (1) and is covered by the cover layer (11) at least at the sides.

6. Vapour extraction device according to one of claims 4 or 5, wherein the reinforcement element (120) represents a frame with a U-shaped, an L-shaped, T-shaped or flat cross-section.

7. Vapour extraction device according to one of claims 1 to 6, wherein the cover layer (11) has a chamfer (111) which is directed inwards and faces the upstream side of the filter element (10).

8. Vapour extraction device according to one of claims 4 to 7, wherein the filter element (1) has a magnetisable element and the magnetisable element forms the reinforcement element (120).

## Revendications

1. Dispositif de hotte aspirante qui présente au moins un élément filtrant (1) avec au moins deux couches filtrantes (10), dans lequel l'élément filtrant (1) présente une couche de recouvrement (11), qui est composée de matériau filtrant, qui forme le côté amont de l'élément filtrant (1) et couvre les bords des couches filtrantes (10), et dans lequel le dispositif de hotte aspirante présente une ouverture d'aspiration qui est inclinée par rapport à la verticale ou entre la verticale et l'horizontale et dans lequel le au moins un élément filtrant (1) est disposé de manière telle sur l'ouverture d'aspiration que la couche de recouvrement (11) forme le côté amont de l'élément filtrant (1), **caractérisé en ce que** la couche de recouvrement (11) présente une couche de métal déployé.

2. Dispositif de hotte aspirante selon la revendication 1, dans lequel l'élément filtrant (1) présente un renforcement (12) et la couche de recouvrement (11) couvre le renforcement (12).

3. Dispositif de hotte aspirante selon la revendication 2, dans lequel le renforcement (12) représente une empreinte (121) d'au moins une partie des couches filtrantes (10).

4. Dispositif de hotte aspirante selon l'une des revendications 2 ou 3, dans lequel le renforcement (12) comprend au moins un élément de renforcement (120).

5. Dispositif de hotte aspirante selon la revendication 4, dans lequel l'élément de renforcement (120) est disposé au moins partiellement sur le bord de la couche filtrante (10), qui fait face dans l'élément filtrant (10) au côté amont de l'élément filtrant (1), et est couvert au moins vers les côtés de la couche de recouvrement (11).

6. Dispositif de hotte aspirante selon l'une des revendications 4 ou 5, dans lequel l'élément de renforcement (120) constitue un cadre avec une section transversale en forme de U, en forme de L, en forme de T ou plate.

7. Dispositif de hotte aspirante selon l'une des revendications 1 à 6, dans lequel la couche de recouvrement (11) présente sur le côté, qui fait face au côté amont de l'élément filtrant (10), un bord coudé (111) qui est orienté vers l'intérieur.

8. Dispositif de hotte aspirante selon l'une des revendications 4 à 7, dans lequel l'élément filtrant (1) présente un élément magnétisable et l'élément magnétisable forme l'élément de renforcement (120).
